# FASCICULE DE BREVET EUROPEEN

(11) **EP 4 374 238 B1**
(45) Date de publication et mention de la délivrance du brevet: **29.10.2025**
(21) Numéro de dépôt: 22758249.1
(22) Date de dépôt: 21.07.2022
(51) Int. Cl.: G05D 1/00, G01S 17/933, G01S 17/95, G01W 1/08, G08G 5/25, G08G 5/21, G08G 5/53, G08G 5/55, G08G 5/76

(54) **PROCEDE ET SYSTEME POUR CARACTERISER EN TEMPS REEL DES CONDITIONS ATMOSPHERIQUES DANS UN ENVIRONNEMENT D'UN AERONEF, DRONES MIS EN OUVRE DANS CE SYSTEME ET AERONEF METTANT EN OEUVRE UN TEL SYSTEME**
VERFAHREN UND SYSTEM ZUR ECHTZEITCHARAKTERISIERUNG ATMOSPHÄRISCHER ZUSTÄNDE IN EINER FLUGZEUGUMGEBUNG, DROHNEN IN DIESEM SYSTEM UND FLUGZEUG MIT SOLCH EINEM SYSTEM
METHOD AND SYSTEM FOR CHARACTERIZING, IN REAL TIME, ATMOSPHERIC CONDITIONS IN AN ENVIRONMENT OF AN AIRCRAFT, DRONES IMPLEMENTED IN THIS SYSTEM, AND AIRCRAFT IMPLEMENTING SUCH A SYSTEM

(30) Priorité: 21.07.2021 FR 2107885
(43) Date de publication de la demande: 29.05.2024
(73) Titulaire: Flying Whales, 92150 Suresnes (FR)
(72) Inventeur: SCELO, Damien, 92150 Suresnes (FR); ROTACH, Pauline, 92150 Suresnes (FR); SETTIER, Kewin, 92150 Suresnes (FR); HAUVILLER, Frédéric, 92150 Suresnes (FR)
(74) Mandataire: IP Trust
(86) Numéro de dépôt international: PCT/FR2022/051456
(87) Numéro de publication internationale: WO 2023/002135

(56) Documents cités:
- US-A1- 2019 147 753
- US-A1- 2019 271 563

## Description

### Domaine technique

La présente invention a trait à un procédé pour caractériser en temps réel des conditions atmosphériques susceptibles d'affecter les conditions de vol d'un aéronef, notamment d'un dirigeable. Elle a également trait à un système de caractérisation en temps réel de conditions atmosphériques et à des drones mis en œuvre dans un tel système de caractérisation.

### État de la technique antérieure

Les grands dirigeables porteurs de charges lourdes sont particulièrement sensibles aux rafales de vent lorsqu'ils sont en mode stationnaire pour effectuer des opérations de chargement ou de déchargement au-dessus d'un site. Pour contrer ces rafales de vent, il est important de les anticiper afin que les propulseurs latéraux puissent être commandés en temps utile.

La vitesse du vent se mesure à l'aide d'un anémomètre. Les météorologues mesurent le vent « instantané » sur une période de 3 secondes et le vent « moyen » sur une période de 10 minutes à 10 m de hauteur au-dessus du sol.

Une rafale est caractérisée par une brusque variation instantanée du vent, soit en vitesse, soit en direction, augmentation du vent instantané par rapport à sa vitesse moyenne supérieure à 5 m/s.

La détection des rafales peut être réalisée au moyen d'équipements de type LIDAR installés sur le dirigeable. On peut notamment citer le document WO2016188759A1 au nom du présent déposant qui divulgue un dirigeable équipé de plusieurs capteurs de type LIDAR (laser pulsé, longueur d'onde de 1,54 pm) permettant de mesurer la vitesse du vent dans toutes les directions horizontales et verticales à une distance comprise entre 40 m et 400 m du dirigeable.

En fonction du vent sur la zone de travail élaboré avec toutes ces informations, le système doit informer le pilote sur ses performances (maintien de la hauteur, contrôlabilité, ...) en utilisant la masse apparente du dirigeable, la réserve de puissance (turbines - propulseurs, et le vent calculé dans un référentiel donné (x, y, z), par exemple le référentiel de l'aéronef ou bien le référentiel terrestre. Ces informations peuvent déboucher sur un NO-GO (si la marge de puissance est trop faible), mais le pilote ne sera pas capable de le calculer lui-même.

En cas de travail sur zone (la décision avant d'arriver était « GO », les informations (soit de changement du vent, soit de rafales) doivent être transmises aux propulseurs et turbines d'alimentation électrique pour anticiper et minimiser les effets des rafales détectées.

Chaque capteur LIDAR comprend au moins deux lignes de mesure permettant de mesurer deux coordonnées de la vitesse du vent, et quatre lignes de mesure permettant de mesurer une troisième coordonnée de vitesse du vent. Ce dirigeable comprend six capteurs LIDAR soit au moins 24 lignes de mesure.

Pour autant, il semble nécessaire de compléter ces mesures LIDAR par d'autres mesures réalisées à une distance plus grande et dans des configurations spatiales plus complexes que les seules composantes horizontales et verticales.

Avant de connaître les rafales sur la zone de travail (2^{ème} temps de la manœuvre), ce sont les composantes x, y et z du vent dans le référentiel terrestre sur la zone de travail qui doivent être connues à l'avance, afin d'éviter de s'engager dans une zone où les conditions aérologiques ne permettront pas une stabilisation et un maintien du stationnaire avec suffisamment de marge de puissance et de marge de manœuvre pour maintenir un stationnaire précis dans les normes fixées par les opérations.

Des systèmes de détection des conditions atmosphériques sont divulgués par exemple dans les demandes de brevet US 2019/147753 A1 et US 2019/271563 A1, qui utilisent des drones pour détecter les conditions atmosphériques locales.

Le but de l'invention est ainsi de proposer une nouvelle approche de caractérisation des conditions atmosphériques dans l'environnement d'un aéronef, notamment d'un dirigeable, qui permette en particulier d'anticiper des actions propulsives pour corriger les risques de déplacement de l'aéronef soumis à une variation brusque de ces conditions atmosphériques.

### Exposé de l'invention

Un but de l'invention est notamment de remédier à tout ou partie des inconvénients précités.

Selon un premier aspect de l'invention, il est proposé un procédé pour caractériser en temps réel des conditions atmosphériques dans l'environnement d'un aéronef, comprenant les étapes suivantes :
- (E1) déployer à distance dudit aéronef, une pluralité de drones embarquant des équipements de caractérisation de conditions atmosphériques,
- (E2) calculer et transmettre des instructions de positionnement de chaque drone par rapport audit aéronef,
- (E3) collecter, en un ou plusieurs desdits drones, des données de mesure ou de calcul de grandeurs atmosphériques générées par lesdits équipements de caractérisation et des données de positionnement dudit ou desdits drones,
- (E4) transmettre lesdites données de mesure ainsi collectées depuis ledit ou lesdits drones vers ledit aéronef,
- (E5) traiter les données de mesure ainsi transmises, pour identifier un ou plusieurs phénomènes atmosphériques susceptibles d'affecter le comportement statique et/ou dynamique dudit aéronef.

L'étape de traitement (E5) peut être avantageusement agencée pour identifier une survenue d'une rafale de vent à distance de l'aéronef.

Dans une première configuration, les données collectées dans un ou plusieurs des drones peuvent comprendre des données de mesure de la vitesse et de l'intensité du vent auquel ce drone ou ces drones sont soumis.

Dans une seconde configuration, les données collectées dans un ou plusieurs des drones peuvent comprendre des données de calcul de la vitesse et de l'intensité du vent auquel ce drone ou ces drones sont soumis.

L'étape (E3) de collecte de données d'intensité et de direction du vent réalisée dans un drone parmi la pluralité de drones déployés peut comprendre une étape (E31) pour mesurer les courants absorbés par les moteurs électriques d'entraînement des rotors équipant ledit drone ainsi que ses données inertielles, et une étape (E32) pour traiter ces mesures de courant en combinaison avec des données inertielles, de positionnement et d'orientation (heading) dudit drone (position, vitesse, accélération, orientation, vitesse de rotation) et avec ses courbes de performance, pour en déduire une estimation de l'intensité et de la direction du vent.

Le procédé de caractérisation selon l'invention peut en outre comprendre, préalablement à l'étape de déploiement, une étape (Ei) pour planifier le déploiement de la pluralité de drones, en fonction d'informations de météorologie prédictives reçues dans l'aéronef.

Le procédé de caractérisation selon l'invention peut en outre comprendre une étape (Ec) pour commander en temps réel les positions respectives des drones déployés, en fonction de résultats d'identification de phénomènes atmosphériques.

Le procédé de caractérisation selon l'invention peut en outre comprendre une ou plusieurs étapes (Eg) pour gérer l'autonomie énergétique de la pluralité de drones, en fonction d'informations d'estimation des énergies stockées respectivement dans lesdits drones.

L'étape de traitement (E5) peut être agencée pour détecter en anticipation une variation de pression et/ou de température dans un environnement proche de l'aéronef, susceptible d'impacter la portance statique de l'aéronef.

Suivant un autre aspect de l'invention, il est proposé un système pour caractériser en temps réel des conditions atmosphériques dans l'environnement d'un aéronef, mettant en œuvre le procédé de caractérisation selon l'invention, ce système comprenant :
- une pluralité de drones embarquant des équipements de caractérisation de conditions atmosphériques, lesdits drones étant prévus pour être déployés à distance dudit aéronef,
   - au sein dudit aéronef, des moyens pour calculer et transmettre des instructions de positionnement de chaque drone par rapport audit aéronef,
   - des moyens, embarqués dans un ou plusieurs desdits drones, pour collecter des données de mesure ou de calcul de grandeurs atmosphériques générées par lesdits équipements de caractérisation et des données de positionnement dudit ou desdits drones,
   - des moyens pour transmettre lesdites données de mesure ainsi collectées depuis ledit ou lesdits drones vers ledit aéronef,
   - des moyens, embarqués dans ledit aéronef, pour traiter les données de mesure ainsi transmises, pour identifier une ou plusieurs phénomènes atmosphériques susceptibles d'affecter le comportement statique et/ou dynamique dudit aéronef.

Les moyens de traitement peuvent être agencés pour identifier une survenue d'une rafale de vent à distance de l'aéronef.

Au moins un drone parmi la pluralité de drones peut comprendre des moyens pour mesurer la vitesse et l'intensité du vent auquel ce drone ou ces drones sont soumis.

Au moins un drone parmi la pluralité de drones peut comprendre des moyens pour calculer la vitesse et l'intensité du vent auquel ce drone ou ces drones sont soumis.

Les moyens de calcul de la vitesse et de l'intensité du vent peuvent comprendre des moyens pour mesurer les courants absorbés par les moteurs électriques d'entraînement des rotors équipant ledit drone, et des moyens pour traiter ces mesures de courant en combinaison avec des données de positionnement dudit drone pour en déduire une estimation de l'intensité et de la direction du vent.

Au moins un drone parmi la pluralité de drones comprend des moyens pour détecter en anticipation une variation de pression et/ou de température dans un environnement proche de l'aéronef, susceptible d'impacter la portance statique de l'aéronef.

Le système de caractérisation selon l'invention peut en outre comprendre des moyens pour commander en temps réel les positions respectives des drones déployés, en fonction de résultats de traitement de données de mesure ou de calcul de conditions atmosphériques.

Le système de caractérisation selon l'invention peut en outre comprendre des moyens pour gérer l'autonomie énergétique de la pluralité de drones, en fonction d'informations d'estimation des énergies stockées respectivement dans lesdits drones.

Suivant encore un autre aspect de l'invention, il est proposé un drone pour caractériser en temps réel des conditions atmosphériques dans l'environnement d'un aéronef, mis en œuvre dans un système de caractérisation selon l'invention, comprenant :
- un ou plusieurs équipements embarqués de caractérisation de conditions atmosphériques,
- des moyens pour collecter des données de mesure ou de calcul de grandeurs atmosphériques générées par ledit ou lesdits équipements de caractérisation et des données de positionnement dudit drone, et
- des moyens pour transmettre lesdites données de mesure ainsi collectées vers ledit aéronef.

Le ou les équipements embarqués peuvent comprendre un capteur LIDAR agencé pour délivrer des informations d'orientation et d'intensité du vent.

Il est également proposé un aéronef équipé d'un système de caractérisation de conditions atmosphériques selon l'invention, caractérisé en ce qu'il comprend :
- des moyens pour recevoir une pluralité de drones pourvus d'équipements embarqués de caractérisation de conditions atmosphériques,
- des moyens pour calculer et transmettre à tout ou partie desdits drones des instructions de positionnement de chaque drone par rapport audit dirigeable,
- des moyens pour collecter des déterminations d'intensité et de direction du vent et de positionnement, effectuées en chacun desdits drones et émises depuis chacun desdits drones, et
- des moyens pour traiter lesdites déterminations de vent et de positionnement ainsi collectées, de façon à identifier une ou plusieurs brusques accélérations de vent à distance dudit dirigeable.

L'aéronef selon l'invention peut en outre comprendre des moyens pour gérer l'autonomie énergétique de tout ou partie des drones de la pluralité de drones.

Le procédé et le système de caractérisation selon l'invention peuvent avantageusement être mis en œuvre pour des dirigeables, des hélicoptères, des aéronefs à décollage et atterrissage verticaux tels que des VTOL et des taxis urbains.

### Description des figures

D'autres avantages et particularités de l'invention apparaîtront à la lecture de la description détaillée de mises en œuvre et de modes de réalisation nullement limitatifs, au regard de dessins annexés sur lesquels :

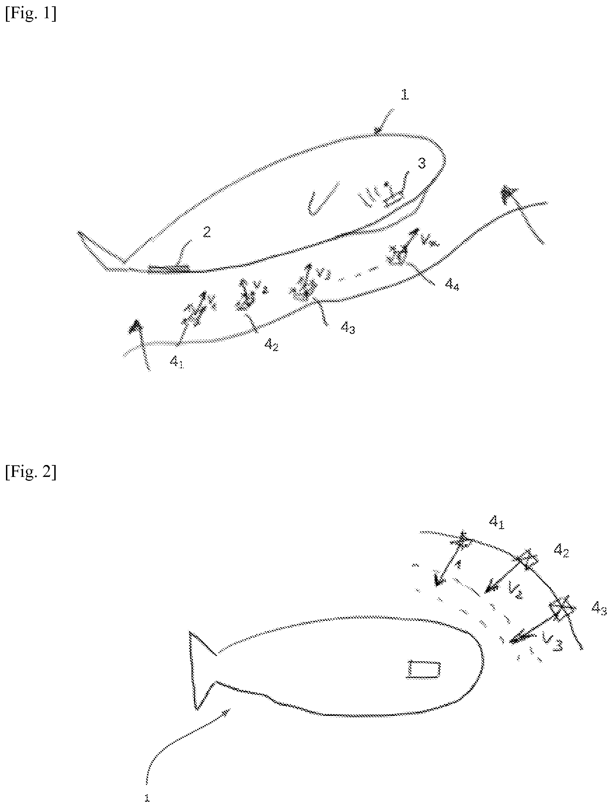

- [Fig. 1] représente schématiquement une vue latérale d'un mode de réalisation d'un dirigeable équipé d'un système selon l'invention,
- [Fig. 2] représente schématiquement une vue de dessous du dirigeable représenté sur la Figure 1,

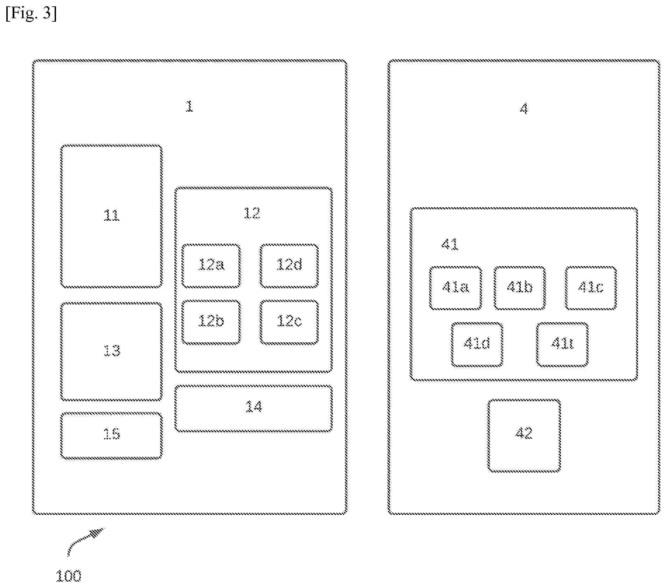

- [Fig. 3] représente schématiquement le système mis en œuvre sur la Figure 1,

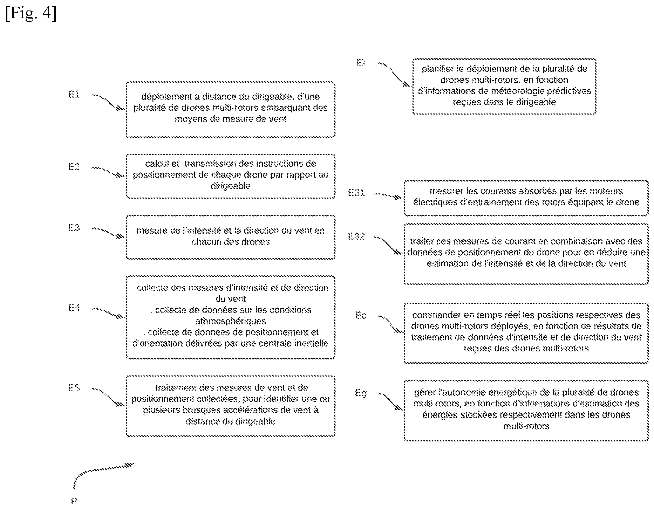

- [Fig. 4] représente schématiquement un procédé mis en œuvre par le dirigeable représenté sur la Figure 1.

### Description de mode de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures, un élément apparaissant sur plusieurs figures conserve la même référence.

Il est maintenant décrit en référence aux figures un dirigeable 1 équipé d'un système 100 de détection de rafale de vent.

Le système 100 comporte des moyens 11, disposés au sein du dirigeable, pour recevoir une pluralité de drones 4, tels que les drones 4₁, 4₂, 4₃,..., 4ₙ. Les moyens 11 peuvent par exemple être formés d'une chambre d'accueil et de chargement des dirigeables. Les drones peuvent par exemple être de type multi-rotors, sans que cette caractéristique soit limitative.

Les drones sont prévus pour être déployés à distance du dirigeable 1.

Selon une possibilité tout ou partie des drones sont embarqués dans le dirigeable au sein des moyens 11 et sont déployés depuis ledit dirigeable.

Les drones peuvent être embarqués dans un autre dirigeable et déployés depuis l'autre dirigeable. Selon une autre possibilité, les drones sont stationnés au sein d'une station réceptrice de drone et déployés depuis cette station, ladite station pouvant être sur terre, ou en mer.

Le système 100 comporte des moyens 12a, embarqués dans le dirigeable, pour calculer et transmettre à chacun des drones 4₁, 4₂, 4₃,..., 4ₙ des instructions de positionnement de chaque drone par rapport audit dirigeable.

Le système 100 comporte des moyens 41, 42, 43,..., 4n embarqués dans chacun des drones 4, de détermination d'intensité et de direction du vent.

L'intensité et la direction du vent peuvent être déterminées selon trois axes formant une base orthogonale, par exemple dans le référentiel de l'aéronef.

Plusieurs techniques peuvent être envisagées pour déterminer l'intensité et la direction du vent.

Le drone peut par exemple être équipé d'un anémomètre 41a et de moyen de traitement 41t des mesures provenant de l'anémomètre.

Selon une autre possibilité, le drone peut être équipé d'un lidar 41b, les moyens de traitement 41t étant configurés pour traiter ces mesures.

Selon encore une autre possibilité, le drone peut être équipé de moyen de positionnement 41c du drone, les moyens de traitement 41t étant configurés pour déterminer une estimation de l'intensité et de la direction du vent à partir de la connaissance de deux relevés de position du drone.

A titre d'exemple préféré de réalisation de l'invention, des drones associés au dirigeable sont équipés d'un moyen de positionnement, et d'accéléromètres (dont on peut traiter et transmettre les informations), ce qui permet de calculer la vitesse du vent en utilisant la vitesse/sol. On peut aussi prévoir que des drones associés au dirigeable soient équipés d'une centrale inertielle configurée pour des délivrer des informations de positionnement, de vitesse et d'orientation.

Selon encore une autre possibilité, un drone selon l'invention est équipé d'une centrale inertielle prévue pour délivrer des données de positionnement et d'orientation, et de moyens de mesure 41d des courants absorbés par les moteurs électriques d'entraînement des rotors équipant le drone.

Les moyens de traitement 41t sont configurés pour traiter ces mesures de courant en combinaison avec des données de positionnement dudit drone pour en déduire un calcul de l'intensité et de la direction du vent. Ce calcul peut être réalisé à partir de la connaissance des courants absorbés et du modèle de performances du drone.

Lorsque le drone comporte plus d'un équipement de calcul de l'intensité et de la direction du vent, les moyens de traitement 41t peuvent en outre être configurés pour fusionner les résultats de calcul issus des équipements.

Le drone peut en outre comporter des moyens de mesure de la pression atmosphérique et/ou de l'humidité relative et/ou de température. Ces mesures de pression, d'humidité et de température peuvent être exploitées pour aider à anticiper la variation de portance aérostatique.

Le système 100 comporte des moyens 42, embarqués dans chacun des drones 4, pour émettre les mesures v₁, v₂, v₃,..., vₙ d'intensité et de direction du vent et de positionnement effectuées par les moyens 41, dans les trois dimensions x, y, z.

Le système 100 peut en outre comporter des moyens 43, embarqués dans au moins l'un des drones 4, de préférence dans chacun des drones 4₁, 4₂, 4₃,..., 4ₙ, pour communiquer avec un autre drone de ladite pluralité de drones 4₁, 4₂, 4₃,..., 4ₙ.

Le système 100 comporte des moyens 12b, embarqués dans le dirigeable, pour collecter des mesures v₁, v₂, v₃,..., vₙ d'intensité et de direction du vent et de positionnement effectuées en chacun des drones 4₁, 4₂, 4₃,..., 4ₙ et émises depuis chacun des drones 4₁, 42, 4₃,..., 4ₙ.

Le système 100 comporte des moyens 12c, pour traiter lesdites mesures v₁, v₂, v₃,..., vₙ de vent et de positionnement ainsi collectées, de façon à identifier une ou plusieurs brusques accélérations de vent à distance dudit dirigeable.

Selon une possibilité, les moyens de traitement 12 b des mesures de vent et de positionnement sont au moins en partie embarqués dans le dirigeable.

Ces moyens de traitement 12 b peuvent être totalement embarqués dans le dirigeable.

Alternativement, les moyens de traitement 12 b peuvent comporter des dispositifs externes au dirigeables. Des moyens de communication sans fil sont alors prévus entre les dispositifs embarqués dans le dirigeable et les dispositifs externes au dirigeable. De tels moyens de communication sans fil sont bien connus et ne sont pas rappelés ici.

L'utilisation d'un système d'intelligence artificielle dédié au traitement des données transmises par l'essaim de drones en temps réel permet de transmettre une information claire, synthétique et utile destinée au pilote ou au pilote automatique. Il peut notamment s'agir d'informations de type GO « on y va » et NO GO « on renonce » en fonction de conditions aérologiques.

Ainsi, le dirigeable peut anticiper ces variations pour stabiliser plus efficacement sa position et optimiser les temps d'intervention. L'analyse de l'évolution de l'environnement, des réactions du dirigeable et des résultats obtenus permettront de faire évoluer le simulateur de vol et par la suite le pilote automatique.

Le système 100 peut comporter des moyens, embarqués dans le dirigeable, pour gérer l'autonomie énergétique de tout ou partie des drones de la pluralité de drones 4, notamment à partir d'information d'estimation des énergies stockées dans les drones. L'estimation des énergies stockées peut être obtenue à partir de la distance de vol parcouru par les drones ainsi que du temps écoulé. Lorsque le drone comporte un moyen de mesure de courant absorbé par les moteurs électriques d'entraînement des rotors équipant ledit drone, l'estimation de l'énergie stockée par ledit drone peut être réalisée à partir de la mesure du courant absorbé.

Le système 100 peut comporter en outre des moyens 14 pour planifier le déploiement de la pluralité de drones, en fonction d'informations de météorologie prédictives reçues dans le dirigeable. Les moyens 14 sont de préférence embarqués dans le dirigeable. Les moyens 14 peuvent par exemple être formés d'une unité de traitement. Les informations de météorologie prédictives reçues dans le dirigeable peuvent par exemple provenir d'une station météo embarquée dans le dirigeable ou d'un système d'information atmosphérique externe au dirigeable.

Le système 100 peut en outre comprendre des moyens 15 pour commander en temps réel les positions respectives des drones déployés 41, 42, 43,..., 4n, en fonction de résultats de traitement de données d'intensité et de direction du vent reçues desdits drones. Les moyens 15 sont typiquement formés d'une unité de traitement configurée pour générer des positions à partir des mesures collectées par les moyens 12b.

Le procédé P de détection de rafale de vent comporte :
- une étape E1 de déploiement à distance du dirigeable 1, d'une pluralité de drones (4₁, 4₂, 4₃,..., 4ₙ) embarquant des moyens de mesure de vent (41),
- une étape E2 de calcul et de transmission des instructions de positionnement de chaque drone par rapport au dirigeable,
- une étape E3 de mesure de l'intensité et la direction du vent en chacun desdits drones,
- une étape E4 de collecte des mesures d'intensité et de direction du vent et de positionnement, effectuées en chacun desdits drones,
- une étape E5 de traitement desdites mesures de vent et de positionnement ainsi collectées, pour identifier une ou plusieurs brusques accélérations de vent à distance dudit dirigeable.

Ultérieurement à l'étape E4, le procédé peut comporter pour une étape Ec pour commander en temps réel les positions respectives des drones déployés (41, 42, 43, 4n), en fonction de résultats de traitement de données d'intensité et de direction du vent reçues desdits drones.

Selon un mode de réalisation, l'étape E3 de mesure d'intensité et de direction du vent réalisée dans un drone parmi la pluralité de drones déployés peut comprendre une étape E31 pour mesurer les courants absorbés par les moteurs électriques d'entraînement des rotors équipant ledit drone, et une étape E32 pour traiter ces mesures de courant en combinaison avec des données de positionnement et d'orientation dudit drone ainsi qu'avec ses courbes de performance pour en déduire une estimation de l'intensité et de la direction du vent.

Ces données de positionnement et d'orientation peuvent être extraites de données inertielles complètes délivrées par une centrale inertielle équipant le drone.

Préalablement à l'étape de déploiement, le procédé P peut comporter une étape Ei pour planifier le déploiement de la pluralité de drones 4₁, 4₂, 4₃, 4ₙ, en fonction d'informations de météorologie prédictives reçues dans le dirigeable.

Le procédé P peut également comprendre une ou plusieurs étape Eg pour gérer l'autonomie énergétique de la pluralité de drones, en fonction d'informations d'estimation des énergies stockées respectivement dans lesdits drones 4₁, 4₂, 4₃, 4ₙ.

Les informations recueillies avec un procédé ou un système selon l'invention permettent d'informer le pilote. La masse apparente du dirigeable, sa réserve de puissance et les informations recueillies sont utilisées pour informer le pilote sur la contrôlabilité du dirigeable et son maintien en hauteur. En outre, les informations recueillies peuvent être transmises au système de gestion de vol pour anticiper et minimiser les effets de rafale détectées.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

Les mesures de conditions atmosphériques incluent des mesures de phénomènes subis non modélisables (rafales, ensoleillement) et de phénomènes physiques modélisables (température, pression, hygrométrie, déplacement des nuages).

## Revendications

1. Procédé pour caractériser en temps réel des conditions atmosphériques dans l'environnement d'un aéronef (1), comprenant les étapes suivantes :
- (E1) déployer à distance dudit aéronef (1), une pluralité de drones (4₁, 4₂, 4₃,..., 4ₙ) embarquant des équipements de caractérisation de conditions atmosphériques (41),
- (E2) calculer et transmettre des instructions de positionnement de chaque drone par rapport audit aéronef (1),
- (E3) collecter, en un ou plusieurs desdits drones, des données de mesure ou de calcul de grandeurs atmosphériques générées par lesdits équipements de caractérisation et des données de positionnement dudit ou desdits drones,
- (E4) transmettre lesdites données de mesure ainsi collectées depuis ledit ou lesdits drones vers ledit aéronef (1),
- (E5) traiter les données de mesure ainsi transmises, pour identifier un ou plusieurs phénomènes atmosphériques susceptibles d'affecter le comportement statique et/ou dynamique dudit aéronef (1).

2. Procédé de caractérisation selon la revendication précédente, **caractérisé en ce que** l'étape de traitement (E5) est agencée pour identifier une survenue d'une rafale de vent à distance dudit aéronef (1).

3. Procédé de caractérisation selon la revendication 2, **caractérisé en ce que** les données collectées dans un ou plusieurs des drones comprennent des données de mesure de la vitesse et de l'intensité du vent auquel ce drone ou ces drones sont soumis.

4. Procédé de caractérisation selon l'une des deux revendications précédentes, **caractérisé en ce que** les données collectées dans un ou plusieurs des drones comprennent des données de calcul de la vitesse et de l'intensité du vent auquel ce drone ou ces drones sont soumis.

5. Procédé de caractérisation selon la revendication 4, dans lequel l'étape (E3) de calcul d'intensité et de direction du vent réalisée dans un drone parmi la pluralité de drones déployés comprend une étape (E31) pour mesurer les courants absorbés par les moteurs électriques d'entraînement des rotors équipant ledit drone, et une étape (E32) pour traiter ces mesures de courant en combinaison avec des données de positionnement et des courbes de performance dudit drone pour en déduire une estimation de l'intensité et de la direction du vent.

6. Procédé de caractérisation selon l'une des revendications précédentes, comprenant en outre, préalablement à l'étape de déploiement, une étape (Ei) pour planifier le déploiement de la pluralité de drones (4₁, 4₂, 4₃, 4ₙ), en fonction d'informations de météorologie prédictives reçues dans l'aéronef (1).

7. Procédé de caractérisation selon l'une quelconque des revendications précédentes, comprenant en outre une étape (Ec) pour commander en temps réel les positions respectives des drones déployés (4₁, 4₂, 4₃, 4ₙ), en fonction de résultats d'identification de phénomènes atmosphériques.

8. Procédé de caractérisation selon l'une quelconque des revendications précédentes, comprenant en outre une ou plusieurs étapes (Eg) pour gérer l'autonomie énergétique de la pluralité de drones, en fonction d'informations d'estimation des énergies stockées respectivement dans lesdits drones (4₁, 4₂, 4₃, 4ₙ).

9. Procédé de caractérisation selon l'une des revendications précédentes, **caractérisé en ce que** l'étape de traitement (E5) est agencée pour détecter en anticipation une variation de pression et/ou de température dans un environnement proche de l'aéronef, susceptible d'impacter la portance statique de l'aéronef (1).

10. Système pour caractériser en temps réel des conditions atmosphériques dans l'environnement d'un aéronef (1), mettant en œuvre le procédé de caractérisation selon l'une quelconque des revendications précédentes, ce système comprenant :
- une pluralité de drones (4₁, 4₂, 4₃,..., 4ₙ) embarquant des équipements de caractérisation de conditions atmosphériques (41), lesdits drones étant prévus pour être déployés à distance dudit aéronef (1),
- au sein dudit aéronef (1), des moyens pour calculer et transmettre des instructions de positionnement de chaque drone par rapport audit aéronef (1),
- des moyens, embarqués dans un ou plusieurs desdits drones, pour collecter des données de mesure ou de calcul de grandeurs atmosphériques générées par lesdits équipements de caractérisation et des données de positionnement dudit ou desdits drones,
- des moyens pour transmettre lesdites données de mesure ainsi collectées depuis ledit ou lesdits drones vers ledit aéronef (1),
- des moyens, embarqués au sein dudit aéronef (1), pour traiter les données de mesure ainsi transmises, pour identifier un ou plusieurs phénomènes atmosphériques susceptibles d'affecter le comportement statique et/ou dynamique dudit aéronef (1).

11. Système de caractérisation selon la revendication 10, **caractérisé en ce que** les moyens de traitement sont agencés pour identifier une survenue d'une rafale de vent à distance dudit aéronef (1).

12. Système de caractérisation selon la revendication 11, **caractérisé en ce que** au moins un drone parmi la pluralité de drones comprend des moyens pour mesurer la vitesse et l'intensité du vent auquel ce drone ou ces drones sont soumis.

13. Système de caractérisation selon l'une des deux revendications précédentes, **caractérisé en ce que** au moins un drone parmi la pluralité de drones comprend des moyens pour calculer la vitesse et l'intensité du vent auquel ce drone ou ces drones sont soumis.

14. Système de caractérisation selon la revendication 13, **caractérisé en ce que** les moyens de calcul de la vitesse et de l'intensité du vent comprennent des moyens pour mesurer les courants absorbés par les moteurs électriques d'entraînement des rotors équipant ledit drone, et des moyens pour traiter ces mesures de courant en combinaison avec des données de positionnement et des courbes de performance dudit drone pour en déduire une estimation de l'intensité et de la direction du vent.

15. Système de caractérisation selon l'une quelconque des revendications 10 à 14, **caractérisé en ce qu'**au moins un drone parmi la pluralité de drones comprend des moyens pour détecter en anticipation une variation de pression et/ou de température dans un environnement proche de l'aéronef, susceptible d'impacter la portance statique de l'aéronef (1).

16. Système de caractérisation selon l'une quelconque des revendications 10 à 15, comprenant en en outre des moyens (15) pour commander en temps réel les positions respectives des drones déployés, en fonction de résultats de traitement de données de mesure ou de calcul de conditions atmosphériques.

17. Système de caractérisation selon l'une quelconque des revendications 10 à 16, comprenant en outre des moyens pour gérer l'autonomie énergétique de la pluralité de drones, en fonction d'informations d'estimation des énergies stockées respectivement dans lesdits drones.

18. Drone pour caractériser en temps réel des conditions atmosphériques dans l'environnement d'un aéronef (1), mis en œuvre dans un système de caractérisation selon l'une quelconque des revendications 10 à 17, comprenant
- un ou plusieurs équipements embarqués de caractérisation de conditions atmosphériques (41),
- des moyens pour collecter des données de mesure ou de calcul de grandeurs atmosphériques générées par ledit ou lesdits équipements de caractérisation et des données de positionnement dudit drone, et
- des moyens pour transmettre lesdites données de mesure ainsi collectées vers ledit aéronef (1).

19. Drone de caractérisation selon la revendication 18, **caractérisé en ce que** le ou les équipements embarqués comprend un capteur LIDAR agencé pour délivrer des informations d'orientation et d'intensité du vent.

20. Aéronef (1) équipé d'un système (100) de caractérisation de conditions atmosphériques selon l'une quelconque des revendications 10 à 17, **caractérisé en ce qu'**il comprend :
- des moyens (11) pour recevoir une pluralité de drones (4₁, 4₂, 4₃, 4ₙ) pourvus d'équipements embarqués de caractérisation de conditions atmosphériques,
- des moyens (12a) pour calculer et transmettre à tout ou partie desdits drones des instructions de positionnement de chaque drone par rapport audit dirigeable,
- des moyens (12b) pour collecter des déterminations d'intensité et de direction du vent et de positionnement effectuées en chacun desdits drones et émises depuis chacun desdits drones, et
- des moyens (12c) pour traiter lesdites déterminations de vent et de positionnement ainsi collectées, de façon à identifier une ou plusieurs brusques accélérations de vent à distance dudit aéronef (1).

21. Aéronef (1) selon la revendication 20, comprenant en outre des moyens (13) pour gérer l'autonomie énergétique de tout ou partie des drones de la pluralité de drones (4₁, 4₂, 4₃, 4ₙ).

## Patentansprüche

1. Verfahren zum Charakterisieren in Echtzeit von atmosphärischen Bedingungen in der Umgebung eines Luftfahrzeugs (1), umfassend die folgenden Schritte:
- (E1) Einsetzen, in einer Entfernung von dem Luftfahrzeug (1), einer Vielzahl von Drohnen (4₁, 4₂, 4₃,..., 4ₙ), die Ausrüstungen zum Charakterisieren von atmosphärischen Bedingungen (41) an Bord tragen,
- (E2) Berechnen und Übermitteln von Positionierungsanweisungen für jede Drohne relativ zu dem Luftfahrzeug (1),
- (E3) Sammeln, in einer oder mehreren der Drohnen, von Mess- oder Berechnungsdaten von atmosphärischen Größen, die durch die Charakterisierungsausrüstungen erzeugt werden, und von Positionsdaten der Drohne(n),
- (E4) Übermitteln der Messdaten, die so von der/den Drohne(n) gesammelt werden, an das Luftfahrzeug (1),
- (E5) Verarbeiten der Messdaten, die so übermittelt werden, zum Identifizieren eines oder mehrerer atmosphärischer Phänomene, die imstande sind, das statische und/oder dynamische Verhalten des Luftfahrzeugs (1) zu beeinflussen.

2. Charakterisierungsverfahren nach dem vorstehenden Anspruch,
**dadurch gekennzeichnet, dass** der Verarbeitungsschritt (E5) zum Identifizieren eines Auftretens einer Windböe in einer Entfernung von dem Luftfahrzeug (1) eingerichtet ist.

3. Charakterisierungsverfahren nach Anspruch 2,
**dadurch gekennzeichnet, dass** die Daten, die in einer oder mehreren Drohnen gesammelt werden, Messdaten der Geschwindigkeit und der Stärke des Windes umfassen, dem diese Drohne(n) ausgesetzt ist/sind.

4. Charakterisierungsverfahren nach einem der zwei vorstehenden Ansprüche, **dadurch gekennzeichnet, dass** die Daten, die in einer oder mehreren der Drohnen gesammelt werden, Berechnungsdaten der Geschwindigkeit und der Stärke des Windes umfassen, dem diese Drohne(n) ausgesetzt ist/sind.

5. Charakterisierungsverfahren nach Anspruch 4, wobei der Schritt (E3) zum Berechnen der Stärke und der Richtung des Windes in einer Drohne aus der Vielzahl der eingesetzten Drohnen einen Schritt (E31) zum Messen der Ströme, die durch die Elektromotoren zum Antreiben der Rotoren aufgenommen werden, die die Drohne ausrüsten, und einen Schritt (E32) zum Verarbeiten dieser Strommessungen in Kombination mit Positionsdaten und Leistungskurven der Drohne zum Ableiten davon einer Schätzung der Stärke und der Richtung des Windes umfasst.

6. Charakterisierungsverfahren nach einem der vorstehenden Ansprüche, ferner umfassend vor dem Einsatzschritt einen Schritt (Ei) zum Planen des Einsatzes der Vielzahl von Drohnen (4₁, 4₂, 4₃, 4ₙ) in Abhängigkeit von Wettervorhersageinformationen (1), die in dem Luftfahrzeug empfangen werden.

7. Charakterisierungsverfahren nach einem der vorstehenden Ansprüche, ferner umfassend einen Schritt (Ec) zum Steuern in Echtzeit der jeweiligen Positionen der eingesetzten Drohnen (4₁, 4₂, 4₃, 4ₙ) in Abhängigkeit von Ergebnissen der Identifizierung atmosphärischer Phänomene.

8. Charakterisierungsverfahren nach einem der vorstehenden Ansprüche, ferner umfassend einen oder mehrere Schritte (Eg) zum Verwalten der Energieautonomie der Vielzahl von Drohnen in Abhängigkeit von Schätzinformationen über die Energien, die jeweils in den Drohnen (4₁, 4₂, 4₃, 4ₙ) gespeichert sind.

9. Charakterisierungsverfahren nach einem der vorstehenden Ansprüche,
**dadurch gekennzeichnet, dass** der Verarbeitungsschritt (E5) zum Erfassen im Voraus einer Druck- und/oder Temperaturschwankung in einer Umgebung in der Nähe des Luftfahrzeugs eingerichtet ist, die imstande ist, den statischen Auftrieb des Luftfahrzeugs (1) zu beeinträchtigen.

10. System zum Charakterisieren in Echtzeit von atmosphärischen Bedingungen in der Umgebung eines Luftfahrzeugs (1), das das Charakterisierungsverfahren nach einem der vorstehenden Ansprüche implementiert, dieses System umfassend:
- eine Vielzahl von Drohnen (4₁, 4₂, 4₃,..., 4ₙ), die Ausrüstungen (41) zum Charakterisieren von atmosphärischen Bedingungen an Bord tragen, wobei die Drohnen zum Einsetzen in Entfernung von dem Luftfahrzeug (1) vorgesehen sind,
- innerhalb des Luftfahrzeugs (1), Mittel zum Berechnen und Übermitteln von Positionierungsanweisungen für jede Drohne relativ zu dem Luftfahrzeug (1),
- Mittel, die in einer oder mehreren der Drohnen an Bord getragen werden, zum Sammeln von Mess- oder Berechnungsdaten von atmosphärischen Größen, die durch die Charakterisierungsausrüstungen erzeugt werden, und von Positionsdaten der Drohne(n),
- Mittel zum Übermitteln der Messdaten, die so von der/den Drohne(n) gesammelt werden, an das Luftfahrzeug (1),
- Mittel, die innerhalb des Luftfahrzeugs (1) an Bord getragen werden, zum Verarbeiten der Messdaten, die so übermittelt werden, zum Identifizieren eines oder mehrerer atmosphärischer Phänomene, die imstande sind, das statische und/oder dynamische Verhalten des Luftfahrzeugs (1) zu beeinflussen.

11. Charakterisierungssystem nach Anspruch 10,
**dadurch gekennzeichnet, dass** die Verarbeitungsmittel zum Identifizieren eines Auftretens einer Windböe in einer Entfernung von dem Luftfahrzeug (1) eingerichtet sind.

12. Charakterisierungssystem nach Anspruch 11,
**dadurch gekennzeichnet, dass** mindestens eine Drohne aus der Vielzahl von Drohnen Mittel zum Messen der Geschwindigkeit und der Stärke des Windes aufweist, dem diese Drohne(n) ausgesetzt ist/sind.

13. Charakterisierungssystem nach einem der zwei vorstehenden Ansprüche,
**dadurch gekennzeichnet, dass** mindestens eine Drohne aus der Vielzahl von Drohnen Mittel zum Berechnen der Geschwindigkeit und der Stärke des Windes aufweist, dem diese Drohne(n) ausgesetzt ist/sind.

14. Charakterisierungssystem nach Anspruch 13,
**dadurch gekennzeichnet, dass** die Mittel zum Berechnen der Geschwindigkeit und der Stärke des Windes Mittel zum Messen der Ströme, die durch die Elektromotoren zum Antreiben der Rotoren aufgenommen werden, die die Drohne ausrüsten, und Mittel zum Verarbeiten dieser Strommessungen in Kombination mit Positionsdaten und Leistungskurven der Drohne zum Ableiten davon einer Schätzung der Stärke und der Richtung des Windes umfassen.

15. Charakterisierungssystem nach einem der Ansprüche 10 bis 14,
**dadurch gekennzeichnet, dass** mindestens eine Drohe aus der Vielzahl von Drohnen Mittel zum Erfassen im Voraus einer Druck- und/oder Temperaturschwankung in einer Umgebung in der Nähe des Luftfahrzeugs umfasst, die imstande ist, den statischen Auftrieb des Luftfahrzeugs (1) zu beeinträchtigen.

16. Charakterisierungssystem nach einem der Ansprüche 10 bis 15, ferner umfassend Mittel (15) zum Steuern in Echtzeit der jeweiligen Positionen der eingesetzten Drohnen in Abhängigkeit von den Ergebnissen der Verarbeitung von Mess- oder Berechnungsdaten von atmosphärischen Bedingungen.

17. Charakterisierungssystem nach einem der Ansprüche 10 bis 16, ferner umfassend Mittel zum Verwalten der Energieautonomie der Vielzahl von Drohnen in Abhängigkeit von Schätzinformationen über die Energien, die jeweils in den Drohnen gespeichert sind.

18. Drohne zum Charakterisieren in Echtzeit von atmosphärischen Bedingungen in der Umgebung eines Luftfahrzeugs (1), die in einem Charakterisierungssystem nach einem der Ansprüche 10 bis 17 implementiert wird, umfassend
- eine oder mehrere Bordausrüstungen zum Charakterisieren von atmosphärischen Bedingungen (41),
- Mittel zum Sammeln von Mess- oder Berechnungsdaten von atmosphärischen Größen, die durch die Charakterisierungsausrüstung(en) erzeugt werden, und von Positionsdaten der Drohne, und
- Mittel zum Übermitteln der Messdaten, die so gesammelt werden, an das Luftfahrzeug (1).

19. Charakterisierungsdrohne nach Anspruch 18,
**dadurch gekennzeichnet, dass** die Bordausrüstung(en) einen LIDAR-Sensor umfasst/umfassen, der zum Liefern von Informationen über eine Ausrichtung und die Stärke des Windes eingerichtet ist.

20. Luftfahrzeug (1), das mit einem System (100) zum Charakterisieren von atmosphärischen Bedingungen nach einem der Ansprüche 10 bis 17 ausgerüstet ist, **dadurch gekennzeichnet, dass** es umfasst:
- Mittel (11) zum Empfangen einer Vielzahl von Drohnen (4₁, 4₂, 4₃, 4ₙ), die mit Bordausrüstungen zum Charakterisieren von atmosphärischen Bedingungen,
- Mitteln (12a) zum Berechnen und Übermitteln an alle oder einen Teil der Drohnen von Positionierungsanweisungen für jede Drohne relativ zu dem Luftfahrzeug vorgesehen sind,
- Mittel (12b) zum Sammeln von Messungen der Stärke und der Richtung des Windes und der Positionierung, die in jeder der Drohnen vorgenommen werden und von jeder der Drohnen ausgesendet werden, und
- Mittel (12c) zum Verarbeiten der Wind- und Positionierungsbestimmungen, die so gesammelt werden, um eine oder mehrere plötzliche Windbeschleunigungen in einer Entfernung von dem Luftfahrzeug (1) zu identifizieren.

21. Luftfahrzeug (1) nach Anspruch 20, ferner umfassend Mittel (13) zum Verwalten der Energieautonomie aller oder eines Teils der Drohnen der Vielzahl von Drohnen (4₁, 4₂, 4₃, 4ₙ).

## Claims

1. A method for **characterizing, in** real time, atmospheric conditions in the environment of an aircraft (1), the method comprising the following steps:
- (E1) deploying, at a distance from said aircraft (1), a plurality of drones (4₁, 4₂, 4₃,..., 4ₙ) carrying on-board equipment (41) for characterizing atmospheric conditions,
- (E2) calculating and transmitting instructions for the positioning of each drone with respect to said aircraft (1),
- (E3) collecting, at one or more of said drones, measured data or calculated data regarding atmospheric variables generated by said characterization equipment and data regarding the positioning of said drone or drones,
- (E4) transmitting said measured data thus collected from said drone or drones to the aircraft (1), and
- (E5) processing the measured data thus transmitted so as to identify one or more atmospheric phenomena liable to affect the static and/or dynamic behavior of said aircraft (1).

2. The characterization method according to the preceding claim,
**characterized in that** the processing step (E5) is arranged so as to identify an occurrence of a gust of wind at a distance from said aircraft (1).

3. The characterization method according to claim 2, **characterized in that** the data collected in one or more of the drones comprise measured data regarding the speed and strength of the wind experienced by this drone or these drones.

4. The characterization method according to either of the two preceding claims, **characterized in that** the data collected in one or more of the drones comprise calculated data regarding the speed and strength of the wind experienced by this drone or these drones.

5. The characterization method according to claim 4, wherein the step (E3) of calculating the strength and direction of the wind carried out in one drone from the plurality of deployed drones comprises a step (E31) for measuring the current drawn by the electric motors driving the rotors with which said drone is equipped, and a step (E32) for processing these current measurements in combination with positioning data and performance curves for said drone in order to infer therefrom an estimate of the strength and direction of the wind.

6. The characterization method according to one of the preceding claims, further comprising, prior to the deployment step, a step (Ei) for planning the deployment of the plurality of drones (4₁, 4₂, 4₃, 4ₙ) according to weather forecast information received in the aircraft (1).

7. The characterization method according to one of the preceding claims, further comprising a step (Ec) for controlling, in real time, the respective positions of the deployed drones (4₁, 4₂, 4₃, 4ₙ) according to results for the identification of atmospheric phenomena.

8. The characterization method according to one of the preceding claims, further comprising one or more steps (Eg) for managing the range of the plurality of drones according to information for estimating the energy stored in said drones (4₁, 4₂, 4₃, 4ₙ).

9. The characterization method according to one of the preceding claims,
**characterized in that** the processing step (E5) is arranged so as to detect, in advance, a variation in pressure and/or temperature in an environment close to the aircraft that is liable to affect the static lift of the aircraft (1).

10. A system for **characterizing, in** real time, atmospheric conditions in the environment of an aircraft (1), the system implementing the characterization method according to one of the preceding claims, this system comprising:
- a plurality of drones (4₁, 4₂, 4₃,..., 4ₙ) carrying on-board equipment (41) for characterizing atmospheric conditions, said drones being intended to be deployed at a distance from said aircraft (1),
- within said aircraft (1), means for calculating and transmitting instructions for the positioning of each drone with respect to said aircraft (1),
- means, carried in one or more of said drones, for collecting measured data or calculated data regarding atmospheric variables generated by said characterization equipment and data regarding the positioning of said drone or drones,
- means for transmitting said measured data thus collected from said drone or drones to said aircraft (1), and
- means, carried within said aircraft (1), for processing the measured data thus transmitted so as to identify one or more atmospheric phenomena liable to affect the static and/or dynamic behavior of said aircraft (1).

11. The characterization system according to claim 10,
**characterized in that** the processing means are arranged so as to identify an occurrence of a gust of wind at a distance from said aircraft (1).

12. The characterization system according to claim 11, **characterized in that** at least one drone from the plurality of drones comprises means for measuring the speed and strength of the wind experienced by this drone or these drones.

13. The characterization system according to either of the two preceding claims, **characterized in that** at least one drone from the plurality of drones comprises means for calculating the speed and strength of the wind experienced by this drone or these drones.

14. The characterization system according to claim 13, **characterized in that** the means for calculating the speed and strength of the wind comprise means for measuring the current drawn by the electric motors driving the rotors with which said drone is equipped, and means for processing these current measurements in combination with positioning data and performance curves for said drone in order to infer therefrom an estimate of the strength and direction of the wind.

15. The characterization system according to one of claims 10 to 14,
**characterized in that** at least one drone from the plurality of drones comprises means for detecting, in advance, a variation in pressure and/or temperature in an environment close to the aircraft that is liable to affect the static lift of the aircraft (1).

16. The characterization system according to one of claims 10 to 15, further comprising means (15) for controlling, in real time, the respective positions of the deployed drones according to results from processing measured data or calculated atmospheric conditions.

17. The characterization system according to one of claims 10 to 16, further comprising means for managing the range of the plurality of drones according to information for estimating the energy stored in said drones.

18. A drone for **characterizing, in** real time, atmospheric conditions in the environment of an aircraft (1), implemented in a characterization system according to one of claims 10 to 17, the drone comprising
- one or more items of on-board equipment (41) for characterizing atmospheric conditions,
- means for collecting measured data or calculated data regarding atmospheric variables generated by said item or items of characterization equipment and data regarding the positioning of said drone, and
- means for transmitting said measured data thus collected to said aircraft (1).

19. The characterization drone according to claim 18, **characterized in that** the item or items of on-board equipment comprises a LIDAR sensor arranged so as to deliver information on the direction and strength of the wind.

20. An aircraft (1) equipped with a system (100) for characterizing atmospheric conditions according to one of claims 10 to 17, **characterized in that** it comprises:
- means (11) for receiving a plurality of drones (4₁, 4₂, 4₃, 4ₙ) fitted with on-board equipment for characterizing atmospheric conditions, - means (12a) for calculating and transmitting, to some or all of said drones, instructions for the positioning of each drone with respect to said airship,
- means (12b) for collecting determinations of strength and direction of the wind and of positioning carried out in each of said drones and transmitted from each of said drones, and
- means (12c) for processing said determinations of wind and of positioning thus collected so as to identify one or more sudden wind accelerations at a distance from said aircraft (1).

21. The aircraft (1) according to claim 20, further comprising means (13) for managing the range of all or some of the drones of the plurality of drones (4₁, 4₂, 4₃, 4ₙ).
